# EUROPÄISCHE PATENTSCHRIFT

(11) **EP 1 597 853 B1**
(45) Veröffentlichungstag und Bekanntmachung des Hinweises auf die Patenterteilung: **25.04.2007**
(21) Anmeldenummer: 04704578.6
(22) Anmeldetag: 23.01.2004
(51) Int. Cl.: H04J 14/02, H04J 14/06

(54) **VERFAHREN UND ANORDNUNG ZUR UEBERTRAGUNG VON WORKING-SIGNALEN UND PROTECTION-SIGNALEN ÜBER OPTISCHE DATENNETZE**
METHOD AND ARRANGEMENT FOR THE TRANSMISSION OF WORKING SIGNALS AND PROTECTION SIGNALS VIA OPTICAL DATA NETWORKS
PROCEDE ET DISPOSITIF PERMETTANT DE TRANSMETTRE DES SIGNAUX DE TRAVAIL ET DES SIGNAUX DE PROTECTION PAR L'INTERMEDIAIRE DE RESEAUX DE DONNEES OPTIQUES

(30) Priorität: 26.02.2003 DE 10308306
(43) Veröffentlichungstag der Anmeldung: 23.11.2005
(73) Patentinhaber: SIEMENS AKTIENGESELLSCHAFT, 80333 München (DE)
(72) Erfinder: HECKER, Nancy, 6020 Innsbruck (AT); RICHTER, Alexander, 81476 München (DE); SABIDO PONCE, Carlos, Enrique, 7571 Bn Oldenzaal (NL)
(86) Internationale Anmeldenummer: PCT/EP2004/000573
(87) Internationale Veröffentlichungsnummer: WO 2004/077715

(56) Entgegenhaltungen:
- EP-A- 0 716 521
- US-A1- 2003 025 956
- SHIRAGAKI T ET AL: "NETWORK RESOURCE ADVANTAGES OF BIDIRECTIONAL WAVELENGTH-PATH SWITCHED RING" IEEE PHOTONICS TECHNOLOGY LETTERS, IEEE INC. NEW YORK, US, Bd. 11, Nr. 10, Oktober 1999 (1999-10), Seiten 1325-1327, XP000880929 ISSN: 1041-1135

## Beschreibung

Die Erfindung betrifft Verfahren und Anordnungen zur Übertragung von Working-Signalen und Protection-Signalen über optische Datennetze.

Für die Übertragung von digitalen Signalen mit hohen Datenraten werden heute Glasfasern wegen ihrer großen Übertragungsbandbreite und ihrer geringen Dämpfung eingesetzt. Um die Übertragungskapazität der Glasfaser nutzen zu können, werden mehrere unterschiedliche Wellenlängen aufweisende Signale (WDM-Signale) parallel über eine Faser übertragen. Mehrere Übertragungskanäle werden hierbei zu Bändern zusammengefasst. Meist werden 2-Fasers-Systeme verwendet, bei denen die Datensignale jeweils in einer Richtung übertragen werden. Es sind jedoch auch 1-Faser-Systeme bekannt; bei denen verschiedene Frequenzbänder oder frequenzmäßig ineinandergeschachtelte Datensignale in beiden Richtungen übertragen werden. Auch sind zur Erhöhung der Übertragungskapazität oder für Ersatzschaltungen 4-Fasersysteme bekannt.

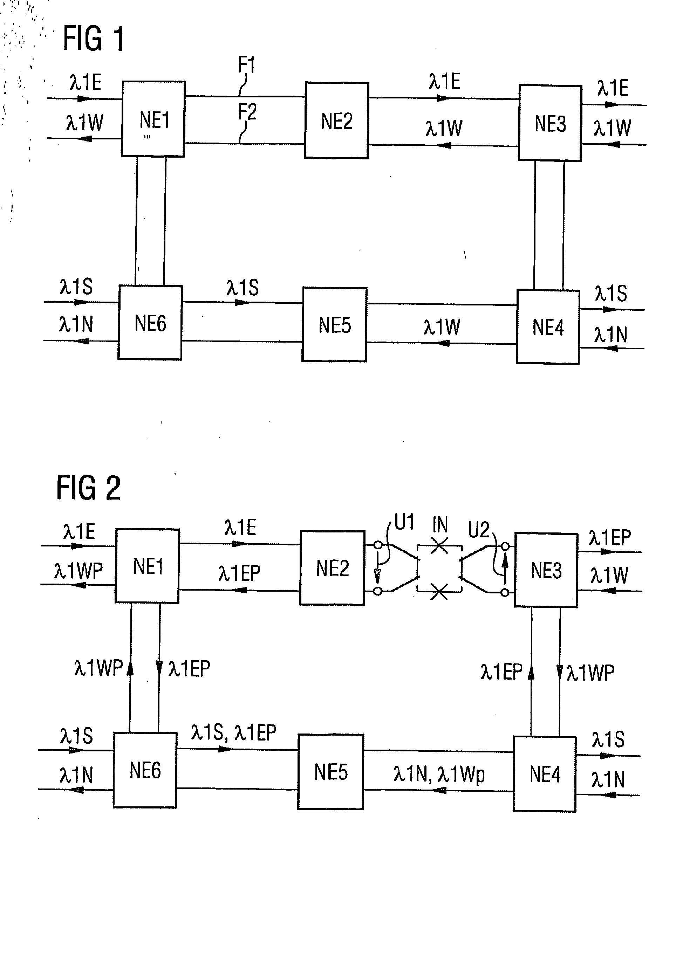

In einem Beitrag der "22nd Conference on Optical Communication - ECOC 96, Oslo, WeB.2.3, pages 3.51 - 3.54 "First results of an experimental Coloured Section Ring" wird eine in Figur 1 dargestellte Ringstruktur beschrieben, bei der benachbarte ADD/DROP-Multiplexer bidirektional über jeweils zwei Fasern miteinander verbunden sind. Für jeden Übertragungsausschnitt zwischen jeweils zwei benachbarten DROP-Multiplexern wird für beide Übertragungsrichtungen auf jeder Faser nur eine Wellenlänge benutzt. Auf allen Übertragungsausschnitten des Ringes werden aber unterschiedliche Wellenlängen verwendet. Das Aus- und Einkoppeln von Signalen erfolgt über optische ADD/DROP-Multiplexer, die optische Filter enthalten. Wenn beispielsweise durch Faserbruch eine Working-Verbindung gestört ist, wird eine Protection-Verbindung über den (meist) längeren intakten Ringabschnitt unter Verwendung der selben Wellenlänge hergestellt, d. h., die bisher über den gestörten Abschnitt gesendeten Working-Signale werden "zurückgeschleift" und über die intakten Abschnitte übertragen. Dies hat den Vorteil, dass die Wellenlänge nicht umgesetzt zu werden braucht. Anstelle einer einzelnen Wellenlänge kann dieses Verfahren natürlich auch für mehrere Wellenlängen und Übertragungsbänder angewendet werden. Das Verfahren bietet zwar den Vorteil, dass die Wellenlängen für Protection-Verbindungen nicht umgesetzt zu werden brauchen, es schränkt aber Übertragungskapazität stark ein.

Dokument EP0716521 offenbart ein Verfahren zur Übertragung von Working-Signalen zwischen Netzelementen über einen ersten Verbindungsweg und von Protection-Signalen über einen zweiten Verbindungsweg eines optischen Netzes (Abbildung 2). Über den zweiten Verbindungsweg werden die Protection-Signale mit denselben Wellenlängen wie die Working-Signale übertragen (Abbildung 2).

Aufgabe der Erfindung ist es, die Übertragungskapazität nicht beeinträchtigende Ersatzverbindungen vorzusehen.

Diese Aufgabe wird durch die Merkmale des Anspruchs 1 gelöst, denen zufolge orthogonal polarisierte Protection-Signale übertragen werden.

Eine hierzu geeignete Anordnung ist in Anspruch 10 angegeben.

Besonders vorteilhaft ist dieses Verfahren in Ringnetzen zu realisieren, bei denen lediglich die übertragenen Signale von den beiden einer Störstelle benachbarten Netzelemente über einen Polsteller in die Gegenrichtung zurückgeschleift werden.

Das erfindungsgemäße Verfahren kann für 1:1-Protection (das gestörte Signal wird über einen ungestörten Verbindungsweg umgeleitet) und für 1+1-Protection (ein Protection-Signal wird stets zusätzlich ausgesendet) bei allen Netzstrukturen, insbesondere bei Ringstrukturen, vorteilhaft eingesetzt werden.

Die Erfindung soll nunmehr anhand von Ausführungsbeispielen näher erläutert werden.

Es zeigen
- Figur 1: ein 2-Faser-Ringnetz,
- Figur 2: das 2-Faser-Ringnetz mit Ersatzschaltung,
- Figur 3: ein Netzelement,
- Figur 4: einen Empfangsteil des Netzelements
- Figur 5: ein 2-Faser-Ringnetz mit 1+1-Protection,
- Figur 6: eine Protection-Umschalteinrichtung,
- Figur 7: ein 4-Faser-Ringnetz mit Span-Protection.

**Figur 1** stellt eine weit verbreitete 2-Faser-Ringnetzstruktur dar. In mit zwei Fasern F1 und F2 gebildete Ringnetz weist die Netzelemente NE1 bis NE6 auf. Für eine Verbindung (Kanal) zwischen dem Netzelement NE1 und dem Netzelement NE3 wird eine Wellenlänge λ1 verwendet, mit der in Ostrichtung ein Working-Signal λ1E über die erste Faser F1 und in der Gegenrichtung ein Working-Signal λ1W mit der gleichen Wellenlänge übertragen wird. Die selbe Wellenlänge kann auch noch zur Übertragung beispielsweise zwischen den Netzelementen in NE4 und NE6 verwendet werden. Die entsprechenden Signale sind mit λ1S und λ1N bezeichnet. Natürlich werden meist noch mehrere Kanäle mit anderen Wellenlängen zur Verbindung der übrigen Netzelemente vorhanden sein, die aber für die Erläuterung der Erfindung außer Betracht bleiben können.

**Figur 2** zeigt einen Faserbruch an einer Störstelle IN zwischen den Netzelementen. Der Verbindungsweg NE1 - NE2 - NE3 ist unterbrochen. In an sich bekannter Weise müssen die Sendesignale von den der Störstelle benachbarten Netzelementen NE2 und NE3 nun durch Umschalteeinrichtungen U1 und U2 "zurückgeschleift" (möglich ist auch bereits ein Zurückschleifen in den Netzelementen NE2 und NE3) und in Gegenrichtung über den ungestörten Teil des Ringnetzes, den zweiten Verbindungsweg NE1 - NE6 - NE5 - NE4 - NE3, übertragen werden. Das Signal λ1E wird folglich über die andere Faser F2 als Protection-Signal λ1EP und das Signal λ1W wird über die Faser F1 als Protection-Signal λ1WP übertragen. Damit ein Signal dieser Wellenlänge nicht mit anderen Signalen der gleichen Wellenlänge kollidiert, muss in herkömmlichen Systemen auf den übrigen Teil des Ringes entweder diese Wellenlänge freigehalten werden, was zu dem eingangs beschriebenen Coloured Section Ring führt, oder die Wellenlänge muss in eine andere nur für Protection-Verbindungen verwendete Wellenlänge umgesetzt werden.

In dem in Figur 2 dargestellten Fall werden zwischen den Netzelementen NE1 und NE3 sowie den Netzelementen NE4 und NE6 Signale mit den selben Wellenlängen λ1 übertragen. Die zwischen den Netzelementen NE4 und NE6 übertragenen Working-Signale sind zur Unterscheidung mit λ1S und λ1N bezeichnet. Vor der Zusammenführung der Signale λ1S und λ1EP bzw. λ1N und λ1WP müssen jeweils die über eine gemeinsame Faser übertragenen Signale (zumindest annähernd) orthogonal zueinander polarisiert ausgerichtet werden. Dies erfolgt für die Signale λ1S und λ1EP zweckmäßigerweise im Netzelement NE6 durch Änderung der Polarisation des Protection-Signals λ1EP.

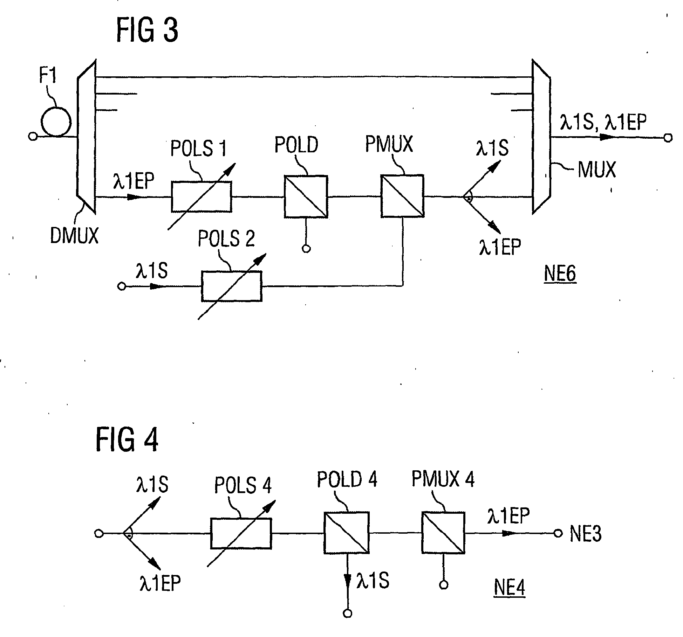

Wesentliche Teile des Netzelements NE6 sind in Figur 3 dargestellt. Der Demultiplexer DMUX spaltet ein empfangenes WDM-Signal (Wavelength Division Multiplex) in einzelne Signale λ1 bis λn auf. Das Signal λn wird (zusammen mit anderen Signalen) "durchgeschleift" und im Multiplexer MUX wieder mit gegebenenfalls neu eingefügten Signalen zu einem WDM-Signal zusammengefasst.

Das Protection-Signal λ1EP wird über die Reihenschaltung eines einen Polarisationsstellers POLS1, eines Polarisationsteilers POLD und eines Polarisationsmultiplexers PMUX geführt. Der Polarisationsteilers POLD ist hier funktionsmäßig nicht erforderlich, muss aber in jedem Netzelement vorhanden sein, um ein Working-Signal vom Protection-Signal trennen und eines der Signale auskoppeln zu können. Im vorliegenden Beispiel wird das Protection-Signal λ1EP aber durch das Netzelement durchgeschleift. Im Polarisationsmultiplexer PMUX wird das Protection-Signal λ1EP mit dem Working-Signal λ1S gleicher Wellenlänge zusammengefasst. Falls auch die Polarisation des Signals λ1S nicht bekannt ist, sind zwei Polsteller POLS1 und POLS2 erforderlich. Entsprechendes gilt für das Protection-Signal λ1WP, dessen Polarisation im Netzelement NE4 orthogonal zur Polarisation des Signals λ1N eingestellt wird.

Im Netzelement NE4 wird das Signal λ1S ausgekoppelt und das und das Protection-Signal λ1EP durchgeschleift. In **Figur 4** sind nur die zur Trennung von Working- und Protection-Signal wesentlichen Teile des Netzelements NE4 dargestellt. Das sind der Polarisationssteller POLS4 und der Polarisationsteiler POLD4, dem gegebenenfalls ein Polarisationsmultiplexer PMUX4 nachgeschaltet ist.

Dem Polarisationssteller POLS4 werden das Working-Signal λ1S und das Protection-Signal λ1EP zugeführt, der die Polarisationen dieser Signale an die Ausrichtung des Polarisationsteiler POLD4 anpasst. Dieser spaltet das Signalgemisch in das Working-Signal λ1S, das hier ausgekoppelt wird, und in das Protection-Signal λ1EP auf, das zum Netzelement NE3 weitergeleitet wird.

Das in Gegenrichtung gesendete Signal λ1N wird entsprechend Figur 3 mit dem Protection-Signal λ1WP zusammengefasst.

Das Netzelement NE3 verfügt wie alle Netzelemente über die gleichen Schaltungsanordnungen. Das Protection-Signal λ1EP wird nach einer Zurückführung am gleichen Port wie bisher empfangen und dort ausgekoppelt.

Die gegenseitige Beeinflussung von Working-Signal und orthogonal polarisiertem Protection-Signal sind in Übertragungsstrecken mit Polarisationsmodendispersion (PMD) immer dann gering, wenn die übertragenen Datensignale gleiche Datenraten und (deren Bits oder Modulationsabschnitte) eine bestimmte Phasenlage zueinander (bei NRZ 0°) aufweisen. Deshalb kann eine Synchronisierung des Protection-Signals zweckmäßig sein.

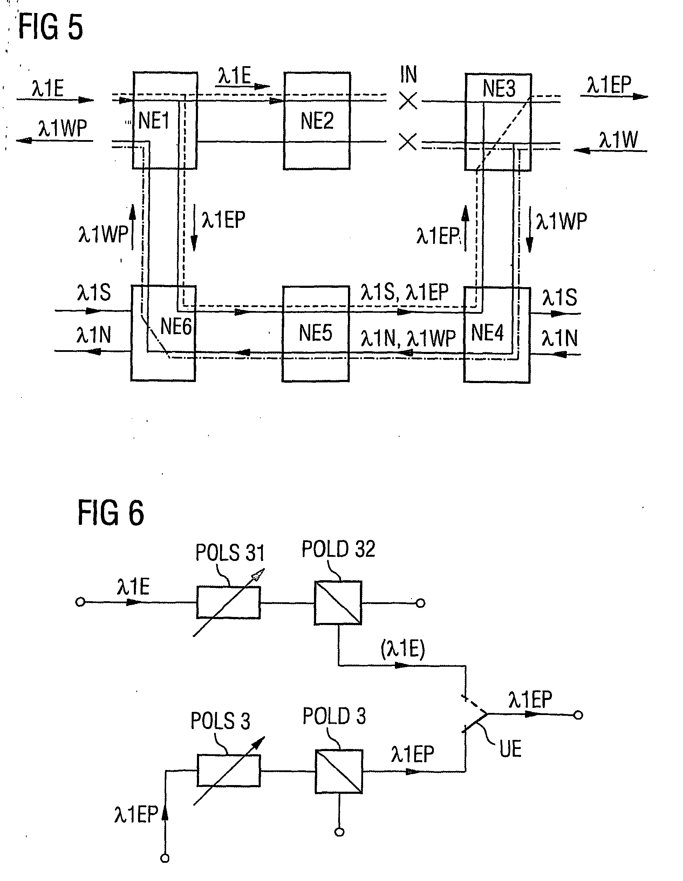

Statt der beschriebenen 1:1-Protection kann eine 1+1-Protection verwendet werden, bei der das Protection-Signal ständig übertragen wird und deshalb ein rascheres Umschalten ermöglicht. Ein Ringnetz mit 1+1-Protection ist in **Figur 5** dargestellt. Das Signal λ1E - gestrichelt dargestellt - wird vom Netzelement NE1 über das Netzelement NE2 zum Netzelement NE3 übertragen und in der Gegenrichtung - strichpunktiert dargestellt - das Signal λ1W. Gleichzeitig werden über die Netzelemente NE6, NE5 und NE4 das Protection-Signals λ1EP, ebenfalls gestrichelt gezeichnet, und in der Gegenrichtung das Protection-Signal λ1WP, ebenfalls strichpunktiert gezeichnet, übertragen. Im Störungsfall erfolgt keine Schleifenbildung durch die Netzelemente NE2 und NE3, da die Protection-Signale, ebenfalls gestrichelt bzw. strichpunktiert dargestellt, bereits über den intakten Schleifenabschnitt gesendet und empfangen werden. In den Netzelementen muss lediglich eine Umschaltung zwischen dem Working-Signal und dem zugehörigen orthogonal polarisierten Protection-Signal erfolgen. Dies ist in **Figur 6** vereinfacht dargestellt. Das Working-Signal wird von einem ersten Anschlussport über einen Polsteller POLS3 mit nachgeschaltetem Polarisationsteiler POLD4 geführt, während das Protection-Signal über einen zweiten Eingangsport und einen Polsteller POLS4 mit nachgeschaltetem Polarisationsteiler POLD5 geführt wird. Im Protection-Fall muss lediglich zwischen diesen zwei Empfangssignalen λ1E und λ1EP durch eine Umschalteeinrichtung UE umgeschaltet werden.

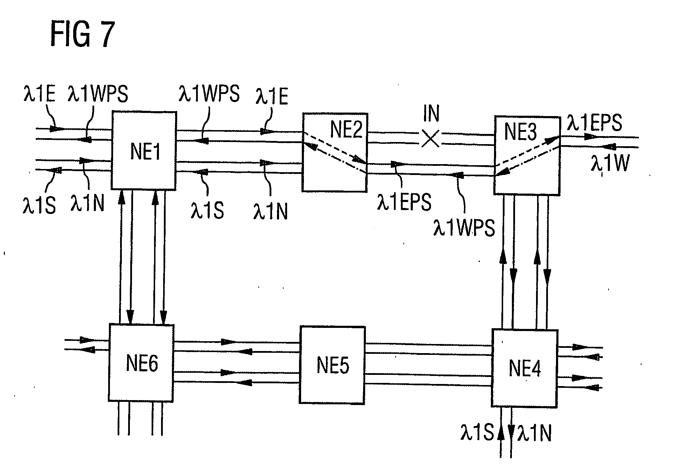

In **Figur 7** ist ein 4-Faser-Ringnetz dargestellt. Zwei Faserpaare F1, F2 und F3, 4 sind räumlich getrennt verlegt. Im Falle einer Störung oder Unterbrechung eines der Faserpaare F1, F2 werden die zwischen den Netzelementen NE1 und NE3 auf den Fasern F1 und F2 übertragenen Signale λ1E und λ1W in den Netzelementen NE2 und NE3 (auch NE1 und NE3 ist möglich) über die Fasern F3 und F4 umgeleitet, wobei sie orthogonal zu den die selbe Wellenlänge aufweisenden weiteren Working-Signalen λ1S und λ1N polarisiert werden. So wird der gestörte Faserabschnitt (Span) NE2 - NE3 ohne Beeinträchtigung der weiteren Working-Signale überbrückt.

Nachzutragen ist noch, dass sowohl bei 2-Faser-Ringnetzen als auch bei 4-Faser-Ringnetzen sämtliche Wellenlängen der orthogonalen Protection-"Kanäle" für niedrig priorisierten Verkehr genutzt werden können, der dann aber im Störungsfall unterbrochen wird, um die höher priorisierten Protection-Signale zu übertragen.

## Patentansprüche

1. Verfahren zur Übertragung von Working-Signalen (λ1E, λ1W) zwischen Netzelementen (NE1, NE3) über einen ersten Verbindungsweg (NE1-NE2-NE3) und von Protection-Signalen (λ1EP, λ1WP) über einen zweiten Verbindungsweg (NE1-NE6-NE5-NE4-NE3) eines optischen Netzes,
**dadurch gekennzeichnet,**
**dass** über den zweiten Verbindungsweg die Protection-Signale (λ1EP, λ1WP) mit den selben Wellenlängen wie die Working-Signale (λ1E, λ1W) übertragen werden,
**dass** die Polarisation der Protection-Signale (λ1EP, λ1WP) jedoch jeweils orthogonal zu der Polarisation von über Abschnitte (NE6-NE4) des zweiten Verbindungsweges (NE1-NE6-NE5-NE4-NE3) mit der selben Wellenlänge übertragenen weiteren Working-Signale (λ1S, λ1N) eingestellt wird.

2. Verfahren nach Anspruch 1,
**dadurch gekennzeichnet,**
**dass** bei einem 2-Faser-Ringnetz mit 1:1-Protection im Störungsfall jeweils das bisher über eine der Fasern (F1, F2) des ersten Verbindungsweges (NE1-NE2-NE3) übertragene Working-Signal (λ1E, λ1W) als Protection-Signal (λ1EP, λ1EW) zurückgeschleift wird und über die andere Faser (F2, F1) über den ungestörten zweiten Verbindungsweg (NE1-NE6-NE5-NE4-NE3) übertragen wird.

3. Verfahren nach Anspruch 2,
**dadurch gekennzeichnet,**
**dass** das empfangene Protection-Signal (λ1EP, λ1WP) in einem der Störstelle (IN) benachbarten Netzelement (NE2, NE3) oder einem dieses Signal empfangenden Netzelement (NE1) ebenfalls auf einen Eingangsport des zugehörigen Working-Signals (λ1E, λ1W) zurückgeschleift wird.

4. Verfahren nach Anspruch 1,
**dadurch gekennzeichnet,**
**dass** bei einem 2 Faser-Ringnetz mit 1+1-Protection ständig Protection-Signale (λ1EP, λ1WP) über den zweiten Verbindungsweg (NE1-NE6-NE5-NE4-NE3) übertragen werden.

5. Verfahren nach Anspruch 2 oder Anspruch 4,
**dadurch gekennzeichnet,**
**dass** in einem Netzelement (NE4, NE3), in dem ein Working-Signal (λ1S) oder ein Protection-Signal (λ1EP) ausgekoppelt wird, eine Trennung der beiden Signale durch einen Polarisationsteiler (POLD, POLD3, POLD4) erfolgt.

6. Verfahren nach Anspruch 2 oder Anspruch 4,
**dadurch gekennzeichnet,**
**dass** in einem Netzelement (NE3), in dem das Working-Signal (λ1E) an einem ersten Eingangsport und das zugeordnete Protection-Signal (λ1EP) an einem zweiten Eingangsport empfangen wird, eine Umschaltung zwischen Working-Signal (λ1E) und Protection-Signal (λ1EP) durch eine Umschalteinrichtung (UE) erfolgt.

7. Verfahren nach Anspruch 1,
**dadurch gekennzeichnet,**
**dass** bei Ringnetzen, die ein erstes Faserpaar (F1, F2) und ein zusätzliches Faserpaar (F3, F4) aufweisen, ständig oder nur im Störungsfall eines Faserpaar (F1, F2) zwischen zwei Netzelementen (NE2, NE3) eine Übertragung von Protection-Signalen (λ1EPS, λ1WPS) zwischen diesen Netzelementen (NE2, NE3) über das andere Faserpaar (F3, F4) erfolgt, die orthogonal zu weiteren auf diesen Fasern (F3, F4) übertragenen Working-Signalen (λ1E2, λ1W2) gleicher Wellenlänge polarisiert werden.

8. Verfahren nach Anspruch 1 oder 2,
**dadurch gekennzeichnet,**
**dass** im störungsfreien Fall Working-Signale niedriger Priorität anstelle der Protection-Signale übertragen werden.

9. Verfahren nach einem der vorhergehenden Ansprüche,
**dadurch gekennzeichnet,**
**dass** orthogonal zueinander polarisierte Signale (λ1EP, λ1S) mit gleicher Datenrate bitsynchron übertragen werden.

10. Anordnung zur Übertragung von Working-Signalen (λ1E, λ1W) zwischen Netzelementen (NE1, NE3) über einen ersten Verbindungsweg (NE1-NE2-NE3) und von Protection-Signalen (λ1EP, λ1WP) über einen zweiten Verbindungsweg (NE1-NE6-NE5-NE4-NE3) eines optischen Netzes, bei dem die Netzelemente (NE1 - NE6) sende- und/oder empfangsseitig Umschalteinrichtungen (US2, US3; UE) aufweisen, um vom gestörten ersten Verbindungsweg (NE1-NE2-NE3) auf den zweiten Verbindungsweg (NE1-NE6-NE5-NE4-NE3) umzuschalten,
**dadurch gekennzeichnet,**
**dass** die Netzelemente (NE1 - NE6) Polarisationssteller (POLS1) aufweisen, um die Polarisation eines Protection-Signals (λ1EP, λ1WP) und eines über die selbe Faser (F1, F2) übertragenen und die selbe Wellenlänge aufweisenden weiteren Working-Signals (λ1S, λ1N) orthogonal zueinander einzustellen, und
**dass** die Netzelemente (NE1 - NE6) Polarisationsteiler (POLD1, POLD3) aufweisen, die jeweils das Protection-Signal (λ1EP, λ1WP) vom weiteren Working-Signal (λ1S, λ1N) trennen.

## Claims

1. Method for transmitting working signals (λ1E, λ1W) between network elements (NE1, NE3) by way of a first connecting path (NE1-NE2-NE3) and protection signals (λ1EP, λ1WP) by way of a second connecting path (NE1-NE6-NE5-NE4-NE3) of an optical network,
**characterised in that**
the protection signals (λ1EP, λ1WP) with the same wavelengths as the working signals (λ1E, λ1W) are transmitted by way of the second connecting path,
the polarisation of the protection signals (λ1EP, λ1WP) is however set in each instance to be orthogonal in relation to the polarisation of further working signals (λ1S, λ1N) transmitted with the same wavelength by way of sections (NE6-NE4) of the second connecting path (NE1-NE6-NE5-NE4-NE3).

2. Method according to claim 1,
**characterised in that**
in the case of a 2-fibre ring network with 1:1 protection, in the event of a disruption the working signal (λ1E, λ1W), hitherto transmitted by way of one of the fibres (F1, F2) of the first connecting path (NE1-NE2-NE3), is looped back as a protection signal (λ1EP, λ1WP) and transmitted by way of the other fibre (F1, F2) by way of the undisrupted second connecting path (NE1-NE6-NE5-NE4-NE3).

3. Method according to claim 2,
**characterised in that**
the received protection signal (λ1EP, λ1WP) in a network element (NE2, NE3) adjacent to the disruption site (IN) or a network element (NE1) receiving said signal is also looped back to an input port of the associated working signal (λ1E, λ1W).

4. Method according to claim 1,
**characterised in that**
in the case of a 2-fibre ring network with 1+1 protection, protection signals (λ1EP, λ1WP) are transmitted constantly by way of the second connecting path (NE1-NE6-NE5-NE4-NE3).

5. Method according to claim 2 or claim 4,
**characterised in that**
in a network element (NE4, NE3), in which a working signal (λ1S) or a protection signal (λ1EP) is extracted, the two signals are separated by means of a polarisation divider (POLD, POLD3, POLD4).

6. Method according to claim 2 or claim 4,
**characterised in that**
in a network element (NE3), in which the working signal (λ1E) is received at a first input port and the assigned protection signal (λ1EP) is received at a second input port, switching takes place between the working signal (λ1E) and the protection signal (λ1EP) by means of a switching facility (UE).

7. Method according to claim 1,
**characterised in that**
in the case of ring networks, having a first fibre pair (F1, F2) and an additional fibre pair (F3, F4), transmission of protection signals (λ1EPS, λ1WPS) between the network elements (NE2, NE3) takes place constantly or only in the event of disruption of a fibre pair (F1, F2) between said two network elements (NE2, NE3) by way of the other fibre pair (F3, F4), being polarised orthogonally in relation to further working signals (λ1E2, λ1W2) of the same wavelength transmitted on said fibres (F3, F4).

8. Method according to claim 1 or 2,
**characterised in that**
if there is no disruption, low-priority working signals are transmitted instead of the protection signals.

9. Method according to one of the preceding claims,
**characterised in that**
signals (λ1EP, λ1S) polarised orthogonally in relation to each other are transmitted bit-synchronously with the same data rate.

10. Arrangement for transmitting working signals (λ1E, λ1W) between network elements (NE1, NE3) by way of a first connecting path (NE1-NE2-NE3) and protection signals (λ1EP, λ1WP) by way of a second connecting path (NE1-NE6-NE5-NE4-NE3) of an optical network, wherein the network elements (NE1 - NE6) have switching facilities (US2, US3; UE) on the transmit and/or receive side, to switch from the disrupted first connecting path (NE1-NE2-NE3) to the second connecting path (NE1-NE6-NE5-NE4-NE3),
**characterised in that**
the network elements (NE1 - NE6) have polarisation setters (POLS1), to set the polarisation of a protection signal (λ1EP, λ1WP) and a further working signal (λ1S, λ1N) transmitted by way of the same fibre (F1, F2) and having the same wavelength to be orthogonal in relation to each other
and
the network elements (NE1 - NE6) have polarisation dividers (POLD1, POLD3), separating the protection signal (λ1EP, λ1WP) from the further working signal (λ1S, λ1N) in each instance.

## Revendications

1. Procédé de transmission de signaux de travail (λ1E, λ1W) entre des éléments de réseau (NE1, NE3) sur un premier chemin de liaison (NE1-NE2-NE3) et de signaux de protection (λ1EP, λ1WP) sur un deuxième chemin de liaison (NE1-NE6-NE5-NE4-NE3) d'un réseau optique, **caractérisé**
**en ce que** sur le deuxième chemin de liaison les signaux de protection (λ1EP, λ1WP) sont transmis avec les mêmes longueurs d'ondes que les signaux de travail (λ1E, λ1W),
**en ce que** la polarisation des signaux de protection (λ1EP, λ1WP) est toutefois réglée de manière à être respectivement orthogonale par rapport à la polarisation d'autres signaux de travail (λ1S, λ1N) transmis avec la même longueur d'onde via des sections (NE6-NE4) du deuxième chemin de liaison (NE1-NE6-NE5-NE4-NE3).

2. Procédé selon la revendication 1, **caractérisé en ce que**, dans un réseau en anneau à 2 fibres avec une protection 1:1, en cas de perturbation, le signal de travail (λ1E, λ1W) jusqu'à présent transmis sur l'une des fibres (F1, F2) du premier chemin de liaison (NE1-NE2-NE3) est respectivement rebouclé en tant que signal de protection (λ1EP, λ1EW) et transmis via l'autre fibre (F2, F1) sur le deuxième chemin de liaison non perturbé (NE1-NE6-NE5-NE4-NE3).

3. Procédé selon la revendication 2, **caractérisé en ce que** le signal de protection reçu (λ1EP, λ1WP) est également rebouclé sur un port d'entrée du signal de travail associé (λ1E, λ1W) dans un élément de réseau (NE2, NE3) voisin du point de perturbation (IN) ou dans un élément de réseau (NE1) recevant ce signal.

4. Procédé selon la revendication 1, **caractérisé en ce que**, dans un réseau en anneau à 2 fibres avec protection 1+1, des signaux de protection (λ1EP, λ1WP) sont transmis en permanence sur le deuxième chemin de liaison (NE1-NE6-NE5-NE4-NE3).

5. Procédé selon la revendication 2 ou la revendication 4, **caractérisé en ce que**, dans un élément de réseau (NE4, NE3) dans lequel un signal de travail (λ1S) ou un signal de protection (λ1EP) sont prélevés, il se produit une séparation des deux signaux par un séparateur de polarisation (POLD, POLD3, POLD4).

6. Procédé selon la revendication 2 ou la revendication 4, **caractérisé en ce que**, dans un élément de réseau (NE3) dans lequel le signal de travail (λ1E) est reçu à un premier port d'entrée et le signal de protection associé (λ1EP) est reçu à un deuxième port d'entrée, une commutation entre le signal de travail (λ1E) et le signal de protection (λ1EP) se produit au moyen d'un dispositif de commutation (UE).

7. Procédé selon la revendication 1, **caractérisé en ce que**, dans des réseaux en anneau qui comportent une première paire de fibres (F1, F2) et une paire de fibres supplémentaire (F3, F4), a lieu, en permanence ou uniquement en cas de perturbation d'une paire de fibres (F1, F2) entre deux éléments de réseau (NE2, NE3), une transmission de signaux de protection (λ1EPS, λ1WPS) entre ces éléments de réseau (NE2, NE3) via l'autre paire de fibres (F3, F4), lesquels sont polarisés orthogonalement par rapport à d'autres signaux de travail (λ1E2, λ1W2) de même longueur d'onde transmis sur ces fibres (F3, F4).

8. Procédé selon la revendication 1 ou 2, **caractérisé en ce que**, en cas de non-perturbation, des signaux de travail de priorité basse sont transmis au lieu des signaux de protection.

9. Procédé selon l'une des revendications précédentes, **caractérisé en ce que** des signaux (λ1EP, λ1S) polarisés orthogonalement l'un par rapport à l'autre sont transmis avec synchronicité binaire avec un même débit de données.

10. Dispositif de transmission de signaux de travail (λ1E, λ1W) entre des éléments de réseau (NE1, NE3) sur un premier chemin de liaison (NE1-NE2-NE3) et de signaux de protection (λ1EP, λ1WP) sur un deuxième chemin de liaison (NE1-NE6-NE5-NE4-NE3) d'un réseau optique dans lequel les éléments de réseau (NE1 - NE6) comportent des dispositifs de commutation (US2, US3; UE) côté émetteur et/ou côté récepteur, pour commuter du premier chemin de liaison perturbé (NE1-NE2-NE3) sur le deuxième chemin de liaison (NE1-NE6-NE5-NE4-NE3), **caractérisé**
**en ce que** les éléments de réseau (NE1 - NE6) comportent des régulateurs de polarisation (POLS1) pour régler de manière orthogonale l'un par rapport à l'autre la polarisation d'un signal de protection (λ1EP, λ1WP) et d'un autre signal de travail (λ1S, λ1N) transmis sur la même fibre (F1, F2) et présentant la même longueur d'onde et
**en ce que** les éléments de réseau (NE1 - NE6) comportent des séparateurs de polarisation (POLD1, POLD3) qui séparent respectivement le signal de protection (λ1EP, λ1WP) de l'autre signal de travail (λ1S, λ1N).
